# FASCICULE DE BREVET EUROPEEN

(11) **EP 3 442 766 B1**
(45) Date de publication et mention de la délivrance du brevet: **11.03.2020**
(21) Numéro de dépôt: 17721776.7
(22) Date de dépôt: 12.04.2017
(51) Int. Cl.: B29C 33/42, B29C 45/26

(54) **PROCEDE ET MOULE POUR LA REALISATION D'UN ELEMENT AERODYNAMIQUE COMPORTANT DES RIBLETS**
PROZESS UND FORMWERKZEUG ZUM HERSTELLEN EINES AERODYNAMISCHEN BAUTEILS MIT RIPPEN
PROCESS AND MOULD FOR MANUFACTUIRING AN AERODYNAMIQUE ELEMENT WITH RIBS

(30) Priorité: 13.04.2016 FR 1653258
(43) Date de publication de la demande: 20.02.2019
(73) Titulaire: Safran, 75015 Paris (FR)
(72) Inventeur: LANFANT, Nicolas Pierre, 77550 Moissy-Crayamel (FR); GONCALVES, Emilie, 77550 Moissy-Crayamel (FR); MANDEL, Robin, 77550 Moissy-Crayamel (FR)
(74) Mandataire: Brevalex
(86) Numéro de dépôt international: PCT/FR2017/050876
(87) Numéro de publication internationale: WO 2017/178756

(56) Documents cités:
- EP-A1- 2 889 114
- JP-A- 2004 025 858
- US-A1- 2013 062 004
- US-A1- 2014 091 488
- US-A1- 2014 262 015

## Description

### DOMAINE TECHNIQUE

L'invention concerne un moule pour la réalisation d'un élément aérodynamique, tel que par exemple un panneau pour une aile d'aéronef ou une pale de turbomachine, qui comporte une succession de nervures et de rainures orientées parallèlement au flux d'air.

L'invention propose plus particulièrement un moule pour réaliser les nervures/rainures d'une seule pièce avec le reste de l'élément aérodynamique.

### ÉTAT DE LA TECHNIQUE ANTÉRIEURE

Dans un souci d'améliorer les performances aérodynamiques d'un aéronef, il a été proposé d'ajouter des nervures et/ou des rainures sur la face externe des ailes par exemple.

Ces nervures/rainures, communément appelées "Riblets" sont orientées parallèlement au sens d'écoulement du flux d'air et sont disposées sur la surface externe de l'aile.

Les riblets ont communément, mais de manière non limitative, une hauteur et une largeur dont la valeur est de l'ordre de 10 à 50 micromètres et s'étendent longitudinalement sur une majeure partie de l'élément aérodynamique.

Ils ont pour effet de diminuer les frottements du fluide à la surface de l'élément aérodynamique et par conséquent, de diminuer la trainée induite. Cela permet d'améliorer les performances aérodynamiques.

Selon un premier mode de réalisation, les riblets sont formés sur un film qui est ultérieurement apposé sur la face externe de l'élément aérodynamique, notamment par collage.

Un tel mode de réalisation permet de fabriquer facilement les riblets sur une plaque souple qu'il est relativement aisé à apposer sur l'élément aérodynamique.

Cependant, ce mode de réalisation implique de nombreuses étapes dans le processus de fabrication et augmente aussi la masse finale de l'élément aérodynamique, notamment à cause de la présence de moyens de fixation tels que des couches de colle.

Un autre mode de réalisation des riblets est de former ceux-ci dans la masse de l'élément aérodynamique.

En effet, l'élément aérodynamique est généralement réalisé par moulage, notamment en matériau composite, les riblets peuvent ainsi être formés lors de cette opération de moulage.

Les documents US 2013/0062004 et EP 2889114 décrivent des exemples d'un procédé de moulage de l'élément avec les riblets en une seule pièce.

Selon ce procédé, une paroi du moule comporte des nervures et/ou des rainures complémentaires de celles formant les riblets. La résine venant en contact avec cette paroi comprend alors des formes en relief constituant les riblets.

Lors d'une étape d'injection de la résine, et selon l'orientation des riblets par rapport au sens d'écoulement de la résine dans le moule, il se peut que les nervures et les rainures formées dans la paroi du moule aient une orientation non parallèle à l'écoulement de résine.

Il en résulte que des turbulences peuvent se former au niveau des sommets des nervures et la résine peut difficilement s'écouler jusqu'au fond des rainures.

Cela a alors pour conséquence une formation incomplète des riblets, ce qui nuira par la suite à leur efficacité.

Aussi, la conception de l'élément aérodynamique comportant les riblets peut impliquer que lors de l'opération de démoulage, le mouvement de l'élément aérodynamique par rapport au moule n'est pas toujours localement normal à la surface comportant les riblets.

Ainsi, lors de l'opération de démoulage, des efforts de cisaillement sont produits sur les riblets, ce qui peut entrainer que les sommets des nervures formant les riblets soient endommagés et par conséquent, l'efficacité des riblets en est affectée.

L'invention a pour but de proposer un moule et un procédé de moulage destinés à réaliser des riblets complètement formés et qui ne risquent pas d'être endommagés lors du procédé de réalisation.

### EXPOSÉ DE L'INVENTION

L'invention propose un moule pour obtenir un élément comportant une face externe et une pluralité de nervures et/ou de rainures formées sur ladite face externe,
caractérisé en ce que l'une des parois du moule comporte des nervures et/ou des rainures dont au moins une partie des nervures et/ou des rainures sont aptes à être rétractées au moins temporairement pour qu'au moins une partie de la surface de ladite paroi soit lisse.

L'intégration à la paroi du moule des nervures escamotables permet de présenter au moins sur une partie de la paroi du moule une surface lisse lors de l'écoulement de la résine, limitant l'apparition d'un écoulement turbulent au niveau des riblets à obtenir. Aussi, l'escamotage des nervures permet qu'elles ne risquent pas de s'accrocher contre les riblets formés lors de l'opération de démoulage.

De préférence, ladite paroi du moule comporte un revêtement piézoélectrique qui est apte à se déformer pour présenter soit une surface lisse, soit une surface comportant lesdites nervures et/ou rainures complémentaires des rainures et nervures de la face externe de l'élément.

De préférence, le revêtement piézoélectrique est apte à présenter la surface comportant les nervures et/ou les rainures lorsqu'il est soumis à un courant électrique et à présenter la surface lisse lorsqu'il n'est soumis à aucun courant.

De préférence, le revêtement piézoélectrique est apte à présenter la surface lisse lorsqu'il est soumis à un courant électrique et à présenter la surface comportant les nervures et/ou les rainures lorsqu'il n'est soumis à aucun courant.

De préférence, le revêtement piézoélectrique est réalisé à base de céramique PZT titano-zirconate de plomb de préférence ayant la formule chimique Pb Zrx,Ti -x O.

De préférence, le moule comporte des moyens d'alimentation du revêtement en courant électrique destiné à provoquer la déformation du revêtement piézoélectrique.

L'invention concerne aussi un procédé de moulage d'un élément comportant une face externe et une pluralité de nervures et/ou de rainures formées sur ladite face externe, par l'utilisation d'un moule selon l'une quelconque des revendications précédentes,
caractérisé en ce qu'il comporte :
- une étape d'alimentation du moule en matériau destiné à former ledit élément pendant laquelle les nervures et/ou les rainures de la paroi du moule sont rétractées pour que ladite paroi présente une surface lisse ;
- une étape au cours de laquelle les nervures et/ou les rainures de la paroi du moule sont déployées qui est mise en œuvre avant le durcissement du matériau ;
- une étape de durcissement du matériau au cours de laquelle les nervures et/ou les rainures de la paroi du moule sont maintenues dans leur position déployées
- une étape de démoulage de l'élément formé.

De préférence, le procédé comporte une étape au cours de laquelle les nervures et/ou les rainures de la paroi du moule sont rétractées, qui est mise en œuvre après l'étape de durcissement du matériau et avant l'étape de démoulage.

De préférence, ledit matériau destiné à former l'élément est une résine qui est coulée lors de l'étape d'alimentation, et qui est polymérisée au cours de l'étape de durcissement.

L'invention concerne aussi un élément aérodynamique comportant une face externe et une pluralité de nervures et/ou de rainures formées sur ladite face externe, qui est obtenu par l'utilisation d'un moule selon l'invention dans un procédé selon l'invention, caractérisé en ce que les nervures et/ou les rainures sont formées sur une ou plusieurs parties de la face externe distinctes les unes des autres.

De préférence, lesdites nervures et/ou rainures de l'élément sont parallèles à une direction longitudinale d'écoulement d'un flux d'air le long de ladite face externe.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'une aile d'aéronef comportant des riblets réalisés selon l'invention ;
- la figure 2 est un détail à plus grande échelle d'un exemple de réalisation de riblets ; et
- les figures 3 à 6 représentent une installation pour la réalisation d'un l'élément aérodynamique réalisée selon l'invention et montrent son état à diverses étapes du processus de production.

### EXPOSÉ DÉTAILLÉ DE MODES DE RÉALISATION PARTICULIERS

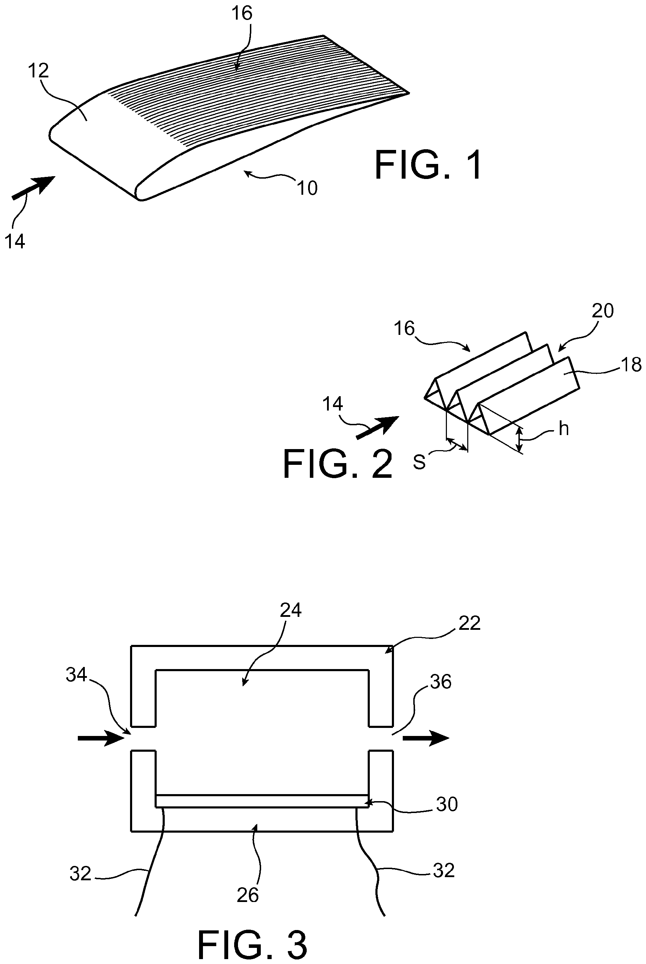

On a représenté à la figure 1 un élément aérodynamique 10 qui consiste ici en un tronçon d'une aile d'aéronef.

Cet élément 10 comporte une face externe 12, ici la face d'extrados, sur laquelle un flux d'air 14 circule longitudinalement.

Afin d'améliorer l'efficacité aérodynamique de l'élément 10, des riblets 16 sont formés sur la face externe 12 de l'élément 10.

Comme on peut le voir plus en détails à la figure 2, les riblets 16 consistent en une succession de nervures 18 et de rainures 20 qui sont orientées longitudinalement, c'est-à-dire parallèlement à la direction de circulation du flux d'air 14 sur la face externe 12.

Selon le mode de réalisation qui sera décrit par la suite, les riblets 16 sont constitués de nervures 18 et de rainures 20 qui sont parallèles les unes aux autres et parallèles à la direction longitudinale de la circulation du flux d'air 14. Ce mode de réalisation est destiné à conférer à l'élément 10 une bonne efficacité aérodynamique.

Il sera compris que l'invention n'est pas limitée à un l'élément 10 ayant une fonction aérodynamique et que l'élément 10 peut aussi avoir toute autre fonction, comme par exemple une fonction de décoration, comme c'est par exemple le cas pour un panneau de tableau de bord de véhicule automobile.

Ainsi, les nervures 18 et les rainures 20 peuvent avoir une forme non rectiligne et/ou ne pas être parallèles les unes aux autres et à une direction principale longitudinale.

Ici, la hauteur "h" et la largeur "s" des nervures 18 et des rainures 20 sont très faibles, c'est-à-dire de l'ordre de 10 à 50 micromètres. Il sera compris que l'invention n'est pas limitée à ces dimensions des riblets qui peuvent par conséquent être plus importantes ou plus faibles.

La section des riblets 16 est ici triangulaire. Il sera compris que l'invention n'est pas limitée à cette forme des riblets, qui peut être, à titre d'exemple non limitatif, trapézoïdale ou en créneau.

La longueur longitudinale des riblets est définie en fonction de la longueur de la face externe 12 sur laquelle ceux-ci sont formés.

Selon un autre aspect de l'élément 10, les riblets 16 sont formés sur une portion seulement ou sur plusieurs portions de la face externe 12 de l'élément 10. Dans le cas d'une pluralité de portions comportant des riblets 16, ces portions sont distinctes et situées à distance les unes des autres.

L'étendue de chaque portion, c'est-à-dire le nombre et les dimensions des riblets sur celle-ci, est en outre définie en fonction de l'effet aérodynamique à obtenir.

Dans la description qui va suivre on fera référence à un procédé de moulage par injection de résine dans un moule 22 pour la réalisation de l'élément 10. Ici aussi, il sera compris que l'invention ne se limite pas à un tel procédé de réalisation de l'élément 10. Ainsi, l'élément 10 peut aussi être réalisé par tout autre procédé utilisant un moule 22 tel que par exemple l'estampage.

Ce moule 22, représenté aux figures 3 à 6, délimite un volume 24 qui est complémentaire de l'élément 10 à obtenir.

Le moule 22 comporte une paroi 26 destinée à la réalisation des riblets 16. Cette paroi 26 est ainsi située au niveau de la face 12 de l'élément 10 à obtenir, qui comporte les riblets 16 à obtenir.

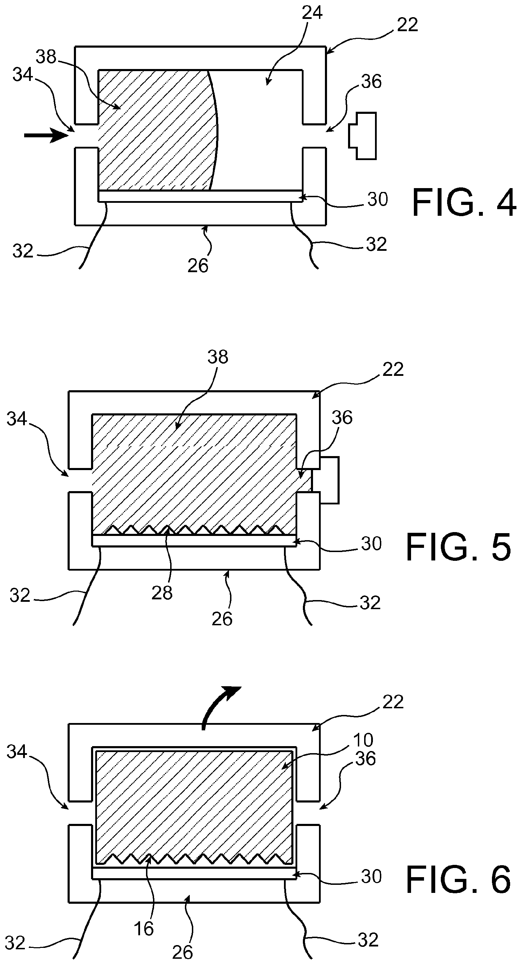

Pour la formation des riblets 16, la paroi 26 du moule 22 comporte, comme on peut le voir à la figure 5, des nervures et des rainures 28 qui sont complémentaires des nervures 18 et des rainures 20 formant les riblets 16.

Ainsi, lorsque l'élément 10 à obtenir comporte des nervures 18 et des rainures 20 parallèles à la direction longitudinales, les nervures et rainures 28 de la paroi 26 du moule 22 sont elles aussi orientées parallèlement les unes aux autres et à la direction longitudinale.

Par contre, lorsque l'élément 10 comporte des nervures 18 et des rainures 20 qui ne sont pas parallèles et/ou longitudinales, les nervures et rainures 28 de la paroi 26 du moule 22 sont formées en conséquence.

Selon l'invention, les nervures et/ou les rainures 28 de la paroi 26 du moule 22 sont escamotables, c'est-à-dire qu'elles sont aptes à changer d'état entre une configuration pour laquelle elles font saillie par rapport à la paroi 26 du moule 22 et une configuration pour laquelle elles sont soit en retrait, soit elles affleurent par rapport à la paroi 26 du moule.

Selon un mode de réalisation préféré de l'invention la paroi 26 est recouverte d'un revêtement piézoélectrique 30 qui est apte à former les nervures et/ou les rainures 28 de la paroi 26. Ce revêtement 30 est apte à se déformer lorsqu'un courant électrique lui est appliqué pour présenter soit une surface lisse, soit une surface comportant les nervures et/ou les rainures 28.

Ainsi, comme on peut le noir notamment à la figure 3, selon une configuration, le revêtement 30 présente une surface lisse et comme représenté à la figure 5, dans une autre configuration, le revêtement 30 présente une surface formée des nervures et/ou des rainures 28.

Ainsi, lorsque les nervures et/ou les rainures 28 de la paroi 26 sont escamotées, la paroi 26 du moule présente une surface lisse qui ne risque pas de produire de turbulences lors de l'alimentation du moule 22 avec la matière destinée à former l'élément 10. Par contre, lorsque le moule 22 est rempli de matière, le revêtement 30 est mis dans sa configuration dans laquelle les nervures et/ou les rainures 28 de la paroi 26 font saillie, pour former les riblets 16.

Selon une variante de réalisation, seule une partie des nervures et/ou des rainures 28 de la paroi 26 du moule 22 sont escamotables.

Dans ce cas, seule la partie de la paroi 26 du moule 22 au niveau de laquelle les nervures et/ou les rainures 28 escamotables sont situées est recouverte par le revêtement piézoélectrique 30

Selon un mode de réalisation préféré, le revêtement 30 est constitué d'une céramique PZT (titano-zirconate de plomb) de formule chimique Pb(Zrx,Ti1-x)O3. Plusieurs compositions sont possibles en faisant varier le taux Zr/Ti.

Le revêtement 30 se présente sous la forme d'un film mince ou d'un gel polymérisé qui est déposé sur la paroi 26 du moule 22 selon une méthode telle que le sol-gel, la pulvérisation cathodique, la MOCVD (MetalOrganic Chemical Vapor Déposition) ou l'ablasion laser.

Ce matériau présente l'avantage que sa tenue en température est supérieure à 300°C, ce qui en fait matériau compatible avec les cycles d'injection/polymérisation de pièces réalisées à partir de résine polymérisée.

Selon un premier mode de réalisation, le revêtement 30 présente une surface lisse lorsqu'il est soumis à un courant électrique d'une valeur prédéfinie et il présente une surface formée par des nervures et/ou des rainures 28 lorsqu'aucun courant ne lui est appliqué.

Selon un deuxième mode de réalisation, le revêtement 30 présente une surface lisse lorsqu'aucun courant ne lui est appliqué et il présente une surface formée par des nervures et/ou des rainures 28 lorsqu'il est soumis à un courant électrique.

Le moule comporte des fils 32 destinés à l'alimentation électrique du revêtement 30 afin de procéder à sa déformation vers l'une ou l'autre de ses deux configurations.

On a représenté aux figures 3 à 6 le moule 22 selon l'invention dans différentes étapes d'un procédé de réalisation du produit 10.

Ici, le produit 10 est réalisé par injection de résine. Le moule 22 comporte à cet effet un orifice 34 destiné à être raccordé à une buse d'injection de la résine et un évent 36 destiné à l'échappement de l'air présent dans le volume intérieur 24 du moule, au fur et à mesure de l'injection de la résine.

Selon une première étape du procédé, représentée à la figure 3, le moule 22 est mis en place, avec le revêtement 30 recouvrant la paroi 26.

Le revêtement 30 est mis dans sa configuration pour laquelle il présente une surface lisse, c'est-à-dire que les nervures et/ou les rainures 28 ne sont pas apparentes. Pour cela, la valeur du courant électrique qui lui est appliqué est soit égale à la valeur prédéfinie ou elle est nulle, selon le mode de réalisation du revêtement.

Selon une deuxième étape du procédé représentée à la figure 4, le matériau destiné à former le produit 10, c'est-à-dire ici la résine 38, est injecté dans le moule 22 par l'orifice d'injection 34. L'évent 36 reste ouvert pour permettre l'échappement de l'air.

Aussi, pendant cette deuxième étape, le revêtement 30 est maintenu dans sa configuration lisse pour laquelle les nervures et/ou les rainures 28 sont escamotées, c'est-à-dire que la valeur du courant appliqué sur le revêtement 30 est inchangée.

Ainsi, lors de l'injection de la résine 38, il n'y a pas de turbulences dans l'écoulement de celle-ci au niveau de la paroi 26. Il n'y a donc pas de risque de présence de porosités dans la matière.

A l'issue de cette deuxième étape, la totalité du volume intérieur 24 du moule 22 est remplie par la résine 38. Aussi, le revêtement 30 est totalement recouvert par la résine 38, sans la présence de bulles d'air entre le revêtement 30 et la résine 38.

Selon une troisième étape du procédé, représentée à la figure 5, l'orifice d'injection 34 et l'évent 36 du moule 22 sont obturés pour empêcher la sortie de résine 38 hors du moule 22 et maintenir la pression dans le moule, voire pour appliquer une pression de gavage afin de compenser les phénomènes de retrait de la résine.

Pendant cette étape, la résine 38 est encore fluide, elle peut encore être façonnée.

Ainsi, au cours de cette troisième étape, la forme du revêtement 30 est modifiée pour que le revêtement 30 passe depuis l'état qu'il présentait au cours des premières étapes et dans lequel il présente une surface lisse vers l'état représenté à la figure 5 dans lequel il présente les nervures et/ou les rainures 28 complémentaires des riblets 16.

Cette modification du revêtement 30 est obtenue en changeant le courant circulant par les fils électriques 32 alimentant le revêtement 30. Ainsi, la valeur du courant devient soit nulle si le revêtement 30 était alimenté pour présenter la forme lisse, soit elle devient égale à une valeur prédéfinie si le revêtement n'était pas alimenté.

A l'issue de cette troisième étape, et comme on peut le voir à la figure 5, la résine qui n'a pas encore été polymérisée est mise à la forme de l'élément 10 à obtenir.

Une quatrième étape du procédé consiste à polymériser la résine 38 pour que celle-ci durcisse et prenne sa forme définitive.

La polymérisation consiste à soumettre la résine 38 à des conditions de pression et de température prédéfinies, par exemple une température supérieure à 150 degrés Celsius, pendant un temps prédéfini.

Au cours de cette quatrième étape, le revêtement 30 est maintenu dans sa forme pour laquelle il présente les nervures et/ou les rainures 28 complémentaires des riblets 16 de sorte à imprimer sur la résine 38 les formes destinées à former les riblets 16.

Ainsi, à l'issue de la quatrième étape, la résine a polymérisé, elle a changé d'état pour devenir solide. L'élément 10 est alors formé et il comporte les riblets 16 sur sa face externe 12.

Le procédé comporte une cinquième étape représentée à la figure 6, qui consiste à retirer l'élément 10 ainsi formé hors du moule 22.

Une première phase de cette cinquième étape consiste à rétracter de nouveau les nervures et/ou les rainures 28, pour que le revêtement 30 présente une surface plane.

Cette rétractation des nervures et/ou des rainures 28 a pour but de désolidariser les nervures et rainures 18, 20 formant les riblets 16 d'avec les nervures et les rainures 28 du revêtement 30.

Ensuite, dans une deuxième phase de cette cinquième étape, l'élément 10 est extrait hors du moule 22.

Puisque les nervures et/ou les rainures 28 du revêtement 30 sont rétractées, elles ne risquent pas de s'accrocher avec les riblets 16, les risques d'endommager les riblets 16 au cours du démoulage sont donc réduits.

## Revendications

1. Procédé de moulage d'un élément (10) comportant une face externe (12) et une pluralité de nervures (18) et/ou de rainures (20) formées sur ladite face externe (12), par l'utilisation d'un moule (22), l'une (26) des parois du moule (22) comportant des nervures et/ou des rainures (28) dont au moins une partie des nervures et/ou des rainures sont aptes à être rétractées au moins temporairement pour qu'au moins une partie de la surface de ladite paroi (26) soit lisse ,
**caractérisé en ce qu'**il comporte :
- une étape d'alimentation du moule (22) en matériau (38) destiné à former ledit élément (10) pendant laquelle les nervures et/ou les rainures (28) de la paroi (26) du moule (22) sont rétractées pour que ladite paroi (26) présente une surface lisse ;
- une étape au cours de laquelle les nervures et/ou les rainures (28) de la paroi (26) du moule (22) sont déployées qui est mise en œuvre avant le durcissement du matériau (38) ;
- une étape de durcissement du matériau (38) au cours de laquelle les nervures et/ou les rainures (28) de la paroi (26) du moule (22) sont maintenues dans leur position déployées
- une étape de démoulage de l'élément (10) formé.

2. Procédé selon la revendication précédente, **caractérisé en ce qu'**il comporte une étape au cours de laquelle les nervures et/ou les rainures (28) de la paroi (26) du moule (22) sont rétractées, qui est mise en œuvre après l'étape de durcissement du matériau (38) et avant l'étape de démoulage.

3. Procédé selon l'une quelconque des revendications 1 ou 2, **caractérisé en ce que** ledit matériau (38) destiné à former l'élément est une résine qui est coulée lors de l'étape d'alimentation, et qui est polymérisée au cours de l'étape de durcissement.

4. Moule (22) destiné à la mise en œuvre d'un procédé selon l'une quelconque des revendications précédentes, pour obtenir un élément (10) comportant une face externe (12) et une pluralité de nervures (18) et/ou de rainures (20) formées sur ladite face externe (12),
**caractérisé en ce que** l'une (26) des parois du moule (22) comporte des nervures et/ou des rainures (28) dont au moins une partie des nervures et/ou des rainures sont aptes à être rétractées au moins temporairement pour qu'au moins une partie de la surface de ladite paroi (26) soit lisse.

5. Moule (22) selon la revendication précédente, **caractérisé en ce que** ladite paroi (26) du moule (22) comporte un revêtement (30) piézoélectrique qui est apte à se déformer pour présenter soit une surface lisse, soit une surface comportant lesdites nervures et/ou rainures (28) complémentaires des rainures et nervures (18, 20) de la face externe (12) de l'élément (10).

6. Moule (22) selon la revendication précédente, **caractérisé en ce que** le revêtement (30) piézoélectrique est apte à présenter la surface comportant les nervures et/ou les rainures (28) lorsqu'il est soumis à un courant électrique et à présenter la surface lisse lorsqu'il n'est soumis à aucun courant.

7. Moule (22) selon la revendication 5, **caractérisé en ce que** le revêtement (30) piézoélectrique est apte à présenter la surface lisse lorsqu'il est soumis à un courant électrique et à présenter la surface comportant les nervures et/ou les rainures (28) lorsqu'il n'est soumis à aucun courant.

8. Moule (22) selon la revendication 5, **caractérisé en ce que** le revêtement (30) piézoélectrique est réalisé à base de céramique PZT (titano-zirconate de plomb) de préférence ayant la formule chimique Pb(Zrx,Ti1-x)O3.

9. Moule (22) selon l'une quelconque des revendications 5 à 8, **caractérisé en ce qu'**il comporte des moyens (32) d'alimentation du revêtement (30) en courant électrique destiné à provoquer la déformation du revêtement (30) piézoélectrique.

10. Elément aérodynamique (10) comportant une face externe (12) et une pluralité de nervures (18) et/ou de rainures (20) formées sur ladite face externe (12), qui est obtenu par l'utilisation d'un moule selon l'une quelconque des revendications 4 à 9 dans un procédé selon l'une quelconque des revendications 1 à 3, **caractérisé en ce que** les nervures (18) et/ou les rainures (20) sont formées sur une ou plusieurs parties de la face externe (12) distinctes les unes des autres.

## Patentansprüche

1. Prozess zum Formen eines Bauteils (10) mit einer Außenfläche (12) und einer Vielzahl von Rippen (18) und/oder Rillen (20) auf der genannten Außenfläche (12) mithilfe eines Formwerkzeugs (22), wobei eine (26) der Wände des Formwerkzeugs (22) Rippen und/oder Rillen (28) umfasst, von denen zumindest ein Teil zumindest zeitweilig eingezogen werden kann, damit zumindest ein Teil der Oberfläche der genannten Wand (26) glatt ist, **dadurch gekennzeichnet, dass** er Folgendes umfasst:
- einen Schritt des Speisens des Formwerkzeugs (22) mit Werkstoff (38), aus dem das genannte Bauteil (10) geformt werden soll, während dessen die Rippen und/oder Rillen (28) der Wand (26) des Formwerkzeugs (22) eingezogen sind, damit die genannte Wand (26) eine glatte Oberfläche aufweist;
- einen Schritt, in dessen Verlauf die Rippen und/oder Rillen (28) der Wand (26) des Formwerkzeugs (22) ausgefahren werden, welcher vor dem Erhärten des Werkstoffs (38) erfolgt;
- einen Schritt des Erhärtens des Werkstoffs (38), während dessen die Rippen und/oder Rillen (28) der Wand (26) des Formwerkzeugs (22) in ausgefahrener Stellung verbleiben;
- einen Schritt des Entformens des geformten Bauteils (10).

2. Prozess gemäß dem vorstehenden Anspruch, **dadurch gekennzeichnet, dass** er einen Schritt umfasst, in dessen Verlauf die Rippen und/oder Rillen (28) der Wand (26) des Formwerkzeugs (22) eingezogen werden, welcher nach dem Schritt des Erhärtens des Werkstoffs (38) und vor dem Schritt des Entformens erfolgt.

3. Prozess gemäß einem der Ansprüche 1 und 2, **dadurch gekennzeichnet, dass** der genannte zum Formen des Bauteils vorgesehene Werkstoff (38) ein Harz ist, der beim Schritt des Speisens vergossen und beim Schritt des Erhärtens polymerisiert wird.

4. Für die Umsetzung eines Prozesses gemäß einem der vorstehenden Ansprüche vorgesehenes Formwerkzeug (22) zum Fertigen eines Bauteils (10) mit einer Außenfläche (12) und einer Vielzahl von Rippen (18) und/oder Rillen (20) auf der genannten Außenfläche (12), **dadurch gekennzeichnet, dass** eine (26) der Wände des Formwerkzeugs (22) Rippen und/oder Rillen (28) umfasst, von denen zumindest ein Teil zumindest zeitweilig eingezogen werden kann, damit zumindest ein Teil der Oberfläche der genannten Wand (26) glatt ist.

5. Formwerkzeug (22) gemäß dem vorstehenden Anspruch, **dadurch gekennzeichnet, dass** die genannte Wand (26) des Formwerkzeugs (22) eine piezoelektrische Beschichtung (30) umfasst, die sich so verformen kann, dass sie entweder eine glatte Oberfläche bildet oder eine Oberfläche, die die genannten Rippen und/oder Rillen (28) umfasst, die komplementär zu den Rippen und Rillen (18, 20) der Außenfläche (12) des Bauteils (10) verlaufen.

6. Formwerkzeug (22) gemäß dem vorstehenden Anspruch, **dadurch gekennzeichnet, dass** die piezoelektrische Beschichtung (30) die die Rippen und/oder Rillen (28) umfassende Oberfläche bilden kann, wenn ein elektrischer Strom an sie angelegt wird, und die glatte Oberfläche bilden kann, wenn kein Strom an sie angelegt wird.

7. Formwerkzeug (22) gemäß Anspruch 5, **dadurch gekennzeichnet, dass** die piezoelektrische Beschichtung (30) die glatte Oberfläche bilden kann, wenn ein elektrischer Strom an sie angelegt wird, und die die Rippen und/oder Rillen (28) umfassende Oberfläche bilden kann, wenn kein Strom an sie angelegt wird.

8. Formwerkzeug (22) gemäß Anspruch 5, **dadurch gekennzeichnet, dass** die piezoelektrische Beschichtung (30) auf Basis von PZT(Blei-Zirkonat-Titanat)-Keramik, vorzugsweise mit der chemischen Formel Pb(Zrx,Til-x)03, erzeugt wird.

9. Formwerkzeug (22) gemäß einem der Ansprüche 5 bis 8, **dadurch gekennzeichnet, dass** es Einrichtungen (32) zur Versorgung der Beschichtung (30) mit elektrischem Strom umfasst, der die Verformung der piezoelektrischen Beschichtung (30) herbeiführen soll.

10. Aerodynamisches Bauteil (10) mit einer Außenfläche (12) und einer Vielzahl von Rippen (18) und/oder Rillen (20) auf der genannten Außenfläche (12), das mithilfe eines Formwerkzeugs gemäß einem der Ansprüche 4 bis 9 in einem Prozess gemäß einem der Ansprüche 1 bis 3 gefertigt wird, **dadurch gekennzeichnet, dass** die Rippen (18) und/oder Rillen (20) auf einem oder mehreren unterschiedlichen Teilbereichen der Außenfläche (12) geformt wurden.

## Claims

1. Method for moulding an element (10) including an external face (12) and a plurality of ribs (18) and/or grooves (20) formed on said external face (12), using a mould (22), one (26) of the walls of the mould (22) including ribs and/or grooves (28) wherein at least a portion of the ribs and/or the grooves are suitable for being retracted at least temporarily so that at least a portion of the surface of said wall (26) is smooth,
**characterised in that** it includes:
- a step for supplying the mould (22) with material (38) intended to form said element (10) during which the ribs and/or the grooves (28) of the wall (26) of the mould (22) are retracted so that said wall (26) has a smooth surface;
- a step during which the ribs and/or the grooves (28) of the wall (26) of the mould (22) are deployed which is carried out prior to the setting of the material (38);
- a step for setting the material (38) during which the ribs and/or the grooves (28) of the wall (26) of the mould (22) are kept in the deployed position thereof
- a step for releasing the element (10) formed from the mould.

2. Method according to the preceding claim, **characterised in that** it includes a step during which the ribs and/or the grooves (28) of the wall (26) of the mould (22) are retracted, which is carried out after the step for setting the material (38) and prior to the mould release step.

3. Method according to any one of claims 1 or 2, **characterised in that** said material (38) intended to form the elements is a resin which is cast during the supply step, and which is polymerised during the setting step.

4. Mould (22) intended to carry out a method according to any one of the preceding claims, to obtain an element (10) including an external face (12) and a plurality of ribs (18) and/or grooves (20) formed on said external face (12),
**characterised in that** one (26) of the walls of the mould (22) includes ribs and/or grooves (28) wherein at least a portion of the ribs and/or the grooves are suitable for being retracted at least temporarily so that at least a portion of the surface of said wall (26) is smooth.

5. Mould (22) according to the preceding claim, **characterised in that** said wall (26) of the mould (22) includes a piezoelectric coating (30) which is suitable for being deformed to have either a smooth surface, or a surface including said ribs and/or grooves (28) complementary of the grooves and ribs (18, 20) of the external face (12) of the element (10).

6. Mould (22) according to the preceding claim, **characterised in that** the piezoelectric coating (30) is suitable for having the surface including the ribs and/or the grooves (28) when it is subjected to an electric current and having the smooth surface when it is not subjected to any current.

7. Mould (22) according to claim 5, **characterised in that** the piezoelectric coating (30) is suitable for having the smooth surface when it is subjected to an electric current and having the surface including the ribs and/or the grooves (28) when it not subjected to any current.

8. Mould (22) according to claim 5, **characterised in that** the piezoelectric coating (30) is produced based on PZT (lead titanate zirconate) ceramic preferably having the chemical formula Pb(Zrx,Ti1-x)O3.

9. Mould (22) according to any one of claims 5 to 8, **characterised in that** it includes means (32) for supplying the coating (30) intended to trigger the deformation of the piezoelectric coating (30).

10. Aerodynamic element (10) including an external face (12) and a plurality of ribs (18) and/or grooves (20) formed on said external face (12), which is obtained using a mould according to any one of claims 4 to 9 in a method according to any one of claims 1 to 3, **characterised in that** the ribs (18) and/or the grooves (20) are formed on one or a plurality of mutually separate portions of the external face (12).
